# EUROPÄISCHE PATENTSCHRIFT

(11) **EP 4 252 402 B1**
(45) Veröffentlichungstag und Bekanntmachung des Hinweises auf die Patenterteilung: **05.11.2025**
(21) Anmeldenummer: 21820239.8
(22) Anmeldetag: 26.11.2021
(51) Int. Cl.: H04L 61/5038, H04L 61/5092

(54) **ZUWEISUNGSVERFAHREN ZUM ZUWEISEN VON GERÄTE-IDENTIFIKATIONEN UND HIERZU EINGERICHTETES NETZWERKGERÄT**
METHOD OF ALLOCATING A DEVICE IDENTIFICATION AND CORRESPONDING DEVICE
PROCÉDÉ D'ALLOCATION D'UNE IDENTIFICATION À UN DISPOSITIF ET DISPOSITIF CORRESPONDANT

(30) Priorität: 27.11.2020 LU 102271
(43) Veröffentlichungstag der Anmeldung: 04.10.2023
(73) Patentinhaber: PHOENIX CONTACT GMBH & CO. KG, 32825 Blomberg (DE)
(72) Erfinder: SCHLABECK, Tarek, 32278 Kirchlengern (DE); ADAM, Aljoscha Sebastian, 32657 Lemgo (DE)
(74) Vertreter: Blumbach · Zinngrebe Patentanwälte PartG mbB
(86) Internationale Anmeldenummer: PCT/EP2021/083183
(87) Internationale Veröffentlichungsnummer: WO 2022/112507

(56) Entgegenhaltungen:
- EP-A1- 3 300 339
- EP-A1- 3 611 876
- EP-B1- 3 076 636
- DE-A1- 19 750 470
- US-A- 6 134 240
- US-A1- 2010 274 945

## Beschreibung

Die Erfindung betrifft ein Zuweisungsverfahren zum Zuweisen von Geräte-Identifikationen für an ein Netzwerk angeschaltete Geräte und ein hierzu eingerichtetes Netzwerkgerät.

Bei IP-Netzwerke beispielsweise, d.h. bei mit einem Internetprotokoll arbeitenden Netzwerken, ist den einzelnen Netzwerkteilnehmern, nachfolgend auch als Netzwerkgeräte oder einfach als Geräte bezeichnet, eine individuelle und eindeutige IP-Adresse zuzuweisen. Diese Zuweisung kann hierbei mit Hilfe verschiedener Methoden erfolgen, dazu gehören auch automatische Methoden, wie das Dynamic Host Configuration Protocol, kurz DHCP (vgl. auch Request for Comments (RFC) 2131 "Dynamic Host Configuration Protocol" sowie RFC 3315 "Dynamic Host Configuration Protocol for IPv6 (DHCPv6)" der Internet Engineering Task Force (IETF)). Hierbei wird ein Adresspool, d.h. ein größerer zusammenhängender Adressbereich auf einem Server zentral verwaltet und und auf Anfrage eines neuen Netzwerkteilnehmers automatisch eine Adresse entnommen. Weitere optionale Fähigkeiten des Protokolls ermöglichen z.B. eine standortabhängige IP-Adress-Vergabe, die allerdings für Endgeräte konzipiert ist, die an einer existierenden Netzwerkinfrastruktur verwendet werden.

Jedoch auch innerhalb einer Netzwerkinfrastruktur, insbesondere innerhalb einer vornehmlich aus Ethernet-Switches aufgebauten und somit mit einem Ethernet-Protokoll arbeitenden Netzwerkinfrastruktur, bei welcher jeweils ausgehend von einem solchen Switch mehrere Netzwerkteilnehmer oder auch Netzwerk-Segmente in einem lokalen Netzwerk miteinander verbunden sind, an welche von dem Switch als Entscheidungsinstanz ausgehend jeweils Daten weitergeleitet werden, könnte eine solche standortabhängige IP-Adress-Vergabe äußerst hilfreich sein.

So kann eine automatische IP-Adress-Vergabe oder Zuweisung für die Netzwerkinfrastruktur besonders für Maschinennetzwerke interessant sein, da die Inbetriebnahme der Maschine mit einer integrierten Netzwerkinfrastruktur dadurch erleichtert werden kann. Erstellt z.B. ein Maschinenbauer im Kundenauftrag Maschinen mit optionalen Komponenten bzw. variierender Größe und wird eine jeweilige Maschine aus mehreren Komponenten zusammengestellt, wobei jede dieser Komponenten wiederum Netzwerkinfrastrukturkomponenten enthält, so ist bei Zusammenbau und Inbetriebnahme der Maschine, evtl. auch beim Kunden, eine Zuweisung der IP-Adressen auf den Komponenten notwendig. Eine manuelle Zuweisung ist jedoch zeitraubend und fehlerbehaftet, wohingegen eine automatische Zuweisung allein mittels DHCP aufgrund des Zufallscharakters nicht empfehlenswert ist.

Ein Beispiel einer Netzwerktopologie basierten "Taufe" eines Netzwerkgerätes, d.h. zur Netzwerktopologie basierten Zuweisung einer Geräte-Identifikation für das Netzwerkgerät, welche vom Prinzip her auf der Netzwerk-Verkabelung der Netzwerkgeräte untereinander basiert und also standortabhängig ist, ist z.B. aus der WO 2020/035308 A1 bekannt.

Dort wird zur Konfiguration eines zu taufenden Gerätes in einem insbesondere industriellen Netzwerk, bevorzugt einer industriellen Automatisierungsanlage ein Weg vorgeschlagen, bei dem a) das zu taufende Gerät von einem Nachbargerät eine Nachbar-Namensnachricht empfängt, welche zumindest einen Gerätenamen des Nachbargerätes und optional einen Namen desjenigen Ports des Nachbargerätes umfasst, über welchen die Nachbar-Namensnachricht an das zu taufende Gerät gesendet wird oder wurde. Das zu taufende Gerät besitzt ein Selbsttaufe-Modul, das dann auf Basis der Nachbar-Namensnachricht einen topologischen Nachbar-Domain-Namen erstellt, welcher zumindest den empfangenen Nachbar-Gerätenamen und den optional empfangenen Nachbar-Portnamen und/oder den Namen des Portes des zu taufenden Gerätes, über welchen das zu taufende Gerät die Nachbar-Namensnachricht empfangen hat, und einen insbesondere dem Selbsttaufe-Modul bekannten, vorgegebenen weiteren Namensteil umfasst. Selbsttaufe-Modul übermittelt dann den erstellten topologischen Nachbar-Domain-Namen an einen Namensdienst-Server, insbesondere einen DNS-Server, bevorzugt im Rahmen einer DNS Query, und erhält von dem Namensdienst-Server insbesondere im Rahmen einer weiteren DNS Query eine Antwort-Nachricht, welche wenigstens einen zu dem topologischen Nachbar-Domain-Namen gehörenden Gerätenamen des zu taufenden Gerätes umfasst. Wenigstens ein Gerätename aus dieser Antwort-Nachricht wird dann dem zu taufenden Gerät zugewiesen, insbesondere von dem Selbsttaufe-Modul auf dem zu taufenden Gerät als Gerätename gespeichert.

Bei dem in der WO 2020/035308 A1vorgeschlagenenen Weise wird folglich ein zentraler Server für einen Namensdienst, insbesondere ein Domain Name System (DNS) Server für die Bereitstellung von Topologie-Informationen für eine dezentrale, selbständige topologische Gerätetaufe eingesetzt, wobei die einzelnen Geräte, sobald sie in ein Netzwerk eingebracht worden sind, die Namen ihrer Nachbarn insbesondere unter Nutzung des sogenannten Link Layer Discovery Protocol (LLDP) erhalten, das insbesondere in IEEE 802.1AB definiert ist welches bekanntermaßen ein herstellerunabhängiges Layer-2-Protokoll ist, das die Möglichkeit bietet, Informationen zwischen Nachbargeräten eines Netzwerks auszutauschen. Ein hierzu ähnlicher Ansatz unter Verwendung eines Adressservers ist auch bereits der EP1558002B1 zu entnehmen. Als weitere Beispiele für dieses Umfeld betreffende Veröffentlichungen können die US8032614B2 und die US20090279454A1 genannt werden.

Die EP 3 300 339 A1 beschreibt eine Topologie-basierte IP Adressierung. Gemäß der Veröffentlichung wird ein "position-based sequential IP addressing process" von einem "ersten Gerät" ausgeführt, wobei dieses "erste Gerät" zuvor mit "global network information" versorgt wird und anschließend jedem Gerät in "seiner Netzgruppe" für die IP Adressierung notwendige Informationen und IDs, insbesondere eine Gruppen-Gerätekennung, mittels einer "Adressierungs-Befehls-Nachricht" zukommen lässt. Die jeweils mitgesandte Gruppen-Gerätekennung ist hierbei innerhalb der Netzgruppe positionsabhängig, wird vom empfangenen Gerät auf seine eigene Position hin aktualisiert und diese wiederum an das nächste Gerät dieser Netzgruppe versandt. Die Gruppengerätekennung ergänzt die globale Netzwerkinformation durch die Bereitstellung einer eindeutigen Gerätenummer auf der Grundlage einer relativen Position für jedes Gerät in der lokalen Netzwerkgruppe und kann von jedem Gerät (für sich selbst) aktualisiert werden, so dass eine relative Position für jedes Gerät in der lokalen Netzwerkgruppe bereitgestellt wird. Die einem jeweiligen Gerät zuzuweisenden IP-Adressen werden dann wiederum anhand der jeweils für sich aktualisierten Gruppengerätekennung und der globalen Netzwerkinformation bestimmt.

Die DE 197 50 470 A1 beschreibt ein Verfahren zur Adressierung von Baugruppensteuerungen einer Parkanlage für Kraftfahrzeuge.

Die EP 3 076 636 B1 beschreibt ein Verfahren zur Bereitstellung eines Namensdienstes innerhalb eines industriellen Kommunikationsnetzes und einen Namensdienst-Server.

Eine Aufgabe der vorliegenden Erfindung ist, eine Möglichkeit für eine automatische Selbstzuweisung einer eindeutigen Geräteidentifikation für in ein Netzwerk einzubindende Geräte zu schaffen, die hierfür keinen zentralen Server benötigt.

Gemäß Erfindung wird diese Aufgabe insbesondere durch ein Verfahren mit den Merkmalen gemäß anhängigem unabhängigem Anspruch gelöst, wobei die jeweils abhängigen Ansprüche jeweils bevorzugte Weiterbildungen umfassen. Gelöst wird die Erfindung ferner durch ein Computerprogramm umfassend Programmcode-Mittel zur Durchführung des Verfahrens sowie durch ein Computerlesbares Medium, das Instruktionen umfasst, die, wenn sie auf wenigstens einem Computer ausgeführt werden, den wenigstens einen Computer veranlassen, die Schritte des Verfahrens durchzuführen.

Mit der Erfindung wird folglich ein Zuweisungsverfahren zum Zuweisen von Geräte-Identifikationen für an ein Netzwerk angeschaltete Geräte vorgeschlagen, die zur Nutzung eines Protokolls zur Nachbarschaftserkennung eingerichtet sind, und zwar zum Einrichten des Netzwerkes, wobei jedes dieser an das Netzwerk angeschalteten und zur Nutzung dieses Protokolls eingerichteten Geräte unter Nutzung dieses Protokolls eingerichtet ist, zum Versenden eigener Geräte-Information an, entsprechend einer für das Netzwerk verwendeten Netzwerktopologie, benachbart an das Netzwerk angeschaltete, zur Nutzung des Protokolls zur Nachbarschaftserkennung eingerichtete Geräte und zum Empfangen von Geräte-Information von, entsprechend der Netzwerktopologie benachbart an das Netzwerk angeschalteten, zur Nutzung des Protokolls zur Nachbarschaftserkennung eingerichteten Geräten. Hierbei ist vorgesehen, zunächst von einem ersten, an das Netzwerk angeschaltete, zur Nutzung des Protokolls zur Nachbarschaftserkennung eingerichtete Gerät, dem eine erste Geräte-Identifikation zugewiesen worden ist, diese erste Geräte-Identifikation zusammen mit dessen eigener Geräte-Information an ein benachbart an das Netzwerk angeschaltet, zur Nutzung des Protokolls zur Nachbarschaftserkennung eingerichtete Gerät zu versenden, und nach Empfangen der diese erste Geräte-Identifikation enthaltenden Geräte-Information durch dieses benachbart an das Netzwerk angeschaltete Gerät für dieses Gerät basierend auf der ersten Geräte-Identifikation wiederum eine eigene Geräte-Identifikation abzuleiten, welche diesem Gerät zugewiesen wird und von diesem Gerät zusammen mit dessen eigener Geräte-Information an ein weiteres, zu diesem Gerät benachbart an das Netzwerk angeschaltetes, zur Nutzung des Protokolls zur Nachbarschaftserkennung eingerichtetes Gerät, sofern vorhanden, versandt werden kann und insbesondere versandt wird. Für jedes weitere, zur Nutzung des Protokolls zur Nachbarschaftserkennung eingerichtete Gerät wird nach Empfangen einer eine Geräte-Identifikation enthaltenden Geräte-Information basierend auf der darin enthaltenden Geräte-Identifikation wenigstens einmal wiederum eine eigene Geräte-Identifikation abgeleitet, welche dann diesem weiteren Gerät zugewiesen wird und von diesem weiteren Gerät zusammen mit dessen eigener Geräte-Information an ein anderes weiteres, zu diesem weiteren Gerät benachbart an das Netzwerk angeschaltete, zur Nutzung des Protokolls zur Nachbarschaftserkennung eingerichtete Gerät, sofern vorhanden, versandt werden kann und insbesondere versandt wird.

Als ein hierzu geeignetes Netzwerkgerät kann folglich ferner ein Netzwerkgerät vorgesehen sein, welches unter Nutzung eines Protokolls zur Nachbarschaftserkennung eingerichtet ist, nach Anschalten an ein Netzwerk und nach Empfangen einer eine Geräte-Identifikation enthaltenden Geräte-Information eines benachbart zum Netzwerkgerät am Netzwerk angeschalteten Gerätes, basierend auf der darin enthaltenden Geräte-Identifikation zum Ableiten, insbesondere Netzwerktopologie-basiert, wenigstens einmal einer eigenen Geräte-Identifikation und zum eigenen Zuweisen dieser Geräte-Identifikation, sowie zweckmäßig zum Speichern und/oder zum Versenden dieser eigenen Geräte-Identifikation an ein anderes, benachbart zum Netzwerkgerät am Netzwerk angeschaltetes Gerät und/oder gegebenenfalls auch an eine zentrale Stelle zur dortigen Reservierung. Ein wesentlicher Vorteil gegenüber dem genannten Stand der Technik liegt somit darin, dass die vorhandene Information einer Nachbar-Geräte-Identifikation von einem jeweils gemäß Netzwerkinfrastruktur benachbart angeordneten Netzgerät unmittelbar, d.h. ohne einen hierfür benötigten zentralen Server, dazu genutzt wird, eine Ableitung der eigenen Geräte-Identifikation, vorzunehmen und sich selbst zuzuweisen, welche dann wiederum einem nächstfolgenden, benachbart angeordneten Netzgerät übermittelt werden kann, die dann wiederum unmittelbar zu dessen eigener Ableitung und Zuweisung der eigenen Geräte-Identifikation verwendet werden kann. Die unmittelbar von einem jeweiligen Nachbar-Gerät selbständig abgeleiteten und sich zugewiesenen eigenen Geräte-Identifikation basieren folglich auf der für dieses Gerät vorherrschenden Netzwerktopologie und sind somit ferner jeweils standortabhängig. Zumindest innerhalb von Teilnetzen, beispielsweise innerhalb eines jeweiligen Netzwerk-Segments, das über ein als Switch, insbesondere Ethernet-Switch aufgebautes Netzwerkgerät mit anderen Netzwerk-Segmenten verbunden ist, können folglich ohne weitere Maßnahmen eindeutige Geräte-Identifikationen selbstzuweisend vergeben werden, d.h. insbesondere zum Einrichten eines Netzwerkes beim erstmaligen Einbinden in das Netzwerk oder auch beim Austauschen eines oder mehrerer Netzwerkgeräte.

Gemäß Erfindung ist ferner vorgesehen, dass eine jede abgeleitete und zugewiesene eigene Geräte-Identifikation, insbesondere zur Vermeidung von Adresskonflikten, auch jeweils an eine zentrale Stelle versandt werden, so dass eine geeignete Reaktion ausgelöst werden kann, zweckmäßiger Weise bei Erkennen von potentiellen Adresskonflikten eine sicherheitsgerichtete Reaktion.

Das erfindungsgemäße Vorgehen kann rein Software- oder rein Hardwareimplementiert oder auch durch eine Kombination geeigneter Hard- und Software gegeben sein. Ergänzend oder alternativ kann für das erfindungsgemäße Vorgehen eine separate Funktionseinheit innerhalb des Netzwerkgerätes vorgesehen sein. Entsprechend kann auch die erfindungsgemäße Einrichtung eines hierfür geeigneten Netzwerkgerätes rein Software- oder rein Hardware- implementiert oder auch durch eine Kombination geeigneter Hard- und Software gegeben sein sowie ergänzend oder alternativ für die erfindungsgemäße Einrichtung eines hierfür geeigneten Netzwerkgerätes eine separate Funktionseinheit innerhalb des Netzwerkgerätes vorgesehen sein. So kann eine separate Funktionseinheit z.B. auch als Software auf ohnehin in dem Netzwerkgerät vorhandener Hardware, beispielsweis einem vorhandenen Prozessor, laufen. Es kann aber auch Hardware speziell für eine separate Funktionseinheit vorgesehen sein.

Weiterhin betrifft die Erfindung somit insbesondere auch ein Computerprogramm, das Programmcodemittel zur Durchführung der Schritte des erfindungsgemäßen Verfahrens umfasst. Schließlich ist Gegenstand der Erfindung somit folglich insbesondere auch ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen. Ein solches Medium kann beispielsweise auch eine CD-ROM oder DVD oder ein USB oder Flash Speicher sein. Es sei ferner angemerkt, dass unter einem computerlesbaren Medium nicht ausschließlich ein körperliches Medium zu verstehen ist, sondern beispielswiese auch in Form eines Datenstromes und/oder eines Signals, welches einen Datenstrom repräsentiert, vorliegen kann.

Weitere Vorteile und Merkmale der Erfindung, insbesondere auch von bevorzugten Ausführungen sowie in den abhängigen Ansprüchen wiedergegebene Weiterbildungen, werden anhand der nachfolgenden Beschreibung unter Bezugnahme auf die beigefügte Zeichnung detaillierter beschrieben. In der Zeichnung zeigt:
- Fig. 1: stark vereinfacht bevorzugte Ausführungen des erfindungsgemäßen Verfahrens,
- Fign. 2a, 2b: stark vereinfacht zwei beispielhafte Topologiestrukturen mit erfindungsgemäß eingerichteten Netzwerkgeräten, und
- Fig. 3: stark vereinfacht eine weitere beispielhafte Topologiestruktur mit erfindungsgemäß eingerichteten Netzwerkgeräten.

Nachfolgend erfolgt unter Bezugnahme auf die beigefügte Zeichnung eine detaillierte Beschreibung bevorzugter Ausführungen im Rahmen der Erfindung.

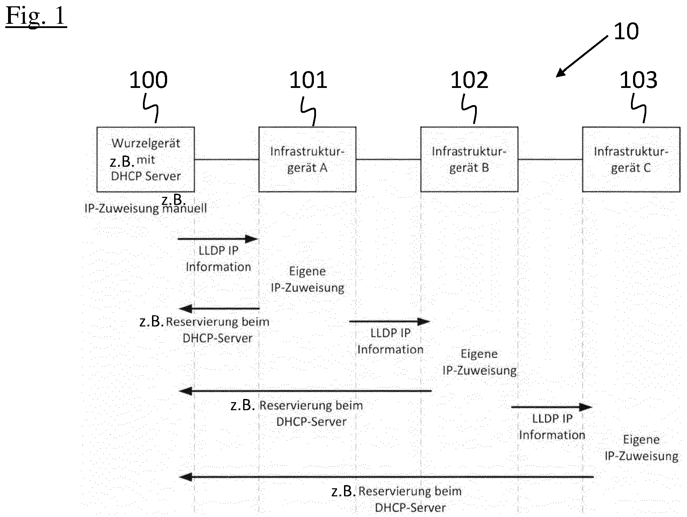

Anhand einer Mehrzahl von an ein Netzwerk 10 angeschalteten und zur Nutzung eines Protokolls zur Nachbarschaftserkennung eingerichteten Geräten, beispielsweise der bei Fig. 1 skizzierten Geräte 100, 101, 102 und 103 kann des erfindungsgemäße Zuweisungsverfahren zum Zuweisen von Geräte-Identifikationen für diese Geräte 100, 101, 102, 103 zum Einrichten des Netzwerkes 10 beispielsweise folgende bevorzugte Ausführungen vorsehen. Es wird davon ausgegangen, dass jedes der an das Netzwerk angeschalteten Gerät, denen im Rahmen der Erfindung eine Geräte-Identifikation unter Nutzung eines solchen Protokolls zur Nachbarschaftserkennung zugewiesen werden soll, unter Nutzung eben dieses Protokolls eingerichtet ist, zum Versenden eigener Geräte-Information an jeweils benachbart an das Netzwerk angeschaltete Geräte, insbesondere ebenso eingerichteten Geräte, und zum Empfangen von Geräte-Information von benachbart an das Netzwerk angeschalteten Geräten, insbesondere ebenso eingerichteten Geräten. Wie eingangs beschrieben, sind derartige Protokolle zur Nachbarschaftserkennung und eine entsprechende Einrichtung der diese nutzenden, an ein Netzwerk angeschalteten Geräte, nachfolgend auch als Netzwerkinfrastrukturgeräte bezeichnet, grundsätzlich aus dem Stand der Technik bekannt. Bei diesen Protokollen zur Nachbarschaftserkennung kann es sich folglich insbesondere um ein herstellerunabhängiges Layer 2 Protokoll handeln, wie zum Beispiel das Link Layer Discover Protocol, kurz LLDP. Da somit auch bei den in Fig. 1 veranschaulichten Ausführungen ein solches LLDP genutzt werden kann, ist die Nutzung des Protokolls zur Nachbarschaftserkennung in Fig. 1 mit LLDP gekennzeichnet.

Von einem ersten, dieser an das Netzwerk angeschalteten Geräte, bei Fig. 1 das mit dem Bezugszeichen 100 identifizierte Gerät, ist bereits eine erste Geräte-Identifikation zugewiesen worden. Dieses erste Gerät besitzt somit bereits seine Geräteidentifikation und steht zweckmäßig am Anfang der zugrundeliegenden Topologie des für das Zuweisungsverfahren betrachteten Netzwerkes. Die jeweilige Benachbarung von entsprechend benachbart zueinander an das Netzwerk angeschalteten Geräten richtet sich folglich in praktischer Ausführung nach dieser Netzwerktopologie. Bei Fig. 1 ist z.B. der Einfachheit halber eine Linien- oder Reihentopologie gezeigt. Das im Rahmen der Erfindung als erstes Gerät bezeichnete Gerät kann somit beispielsweis auch als Wurzelgerät bezeichnet werden, von dem aus sich das betrachtete Netzwerk erstreckt. Bei einem solchen Gerät kann es sich in praktischer Ausführung ferner insbesondere um ein als Switch, insbesondere Ethernet-Switch aufgebautes Netzwerkgerät, handeln, über welches das betrachtete Netzwerk als ein Netzwerk-Segment mit zumindest einem weiteren Netzwerk-Segment zur Bildung eines übergeordneten Netzwerk verbunden wird, und von diesem Switch ausgehend, den jeweiligen an ein solches Netzwerksegment angeschalteten und nach Einrichtung dieses Netzwerksegments in das Netzwerk eingebundenen Netzwerkgeräten jeweils Daten weitergeleitet werden können. Ergänzend oder alternativ kann das im Rahmen der Erfindung als erstes Gerät bezeichnete Gerät beispielsweise auch gleichzeitig einen DHCP Server bereitstellen, insbesondere zu nachfolgend noch detaillierter beschriebenen Zwecken.

Von dem im Rahmen der Erfindung als erstes Gerät bezeichneten Gerät, bei Fig.1 somit z.B. das Gerät 100, dem bereits eine erste Geräte-Identifikation zugewiesen worden ist, kann erfindungsgemäße Verfahren starten. Die Zuweisung dieser erste Geräte-Identifikation kann vorgegeben sein, manuell erfolgen, z.B. durch entsprechende Einstellung direkt am Gerät oder auch durch entsprechende Aktivierung einer überlagerten Netzwerkeinheit, welche diese erste Geräte-Identifikation dem ersten Gerät zuweist, oder auch auf andere Weise, insbesondere automatisiert/automatisch erfolgen.

Diese erste Geräte-Identifikation dient somit als Start-Geräte-Identifikation für das Verfahren bzw. für den in diesem Zusammenhang damit verbundenen Prozess des weitergehenden Zuweisens von Geräte-Identifikationen für die an das Netzwerk dem ersten Gerät nachfolgend angeschlossenen Geräte. Als Geräte-Identifikation eignet sich im Rahmen der Erfindung jede für eine eindeutige Identifizierung eines Gerätes nutzbare Individualisierungsinformation, insbesondere Gerätenamen und/oder IP-Adressen. Bei den in Fig. 1 veranschaulichten Ausführungen ist die Geräte-Identifikation beispielhaft als IP gekennzeichnet.

Von dem ersten, an das Netzwerk angeschaltete, zur Nutzung des Protokolls zur Nachbarschaftserkennung eingerichtete Gerät 100 wird nun diese erste Geräte-Identifikation unter Nutzung des Protokolls zur Nachbarschaftserkennung zum Versenden eigener Geräte-Information, d.h. insbesondere zusammen mit dessen eigener Geräte-Information, an ein benachbart an das Netzwerk angeschaltete, zur Nutzung des Protokolls zur Nachbarschaftserkennung eingerichtete Gerät versandt, gemäß Fig. 1 demnach an das Gerät 101.

Nach Empfangen der diese erste Geräte-Identifikation enthaltenden Geräte-Information durch das benachbart an das Netzwerk angeschaltete Gerät, also gemäß Fig. 1 durch das Gerät 101, wird für dieses Gerät basierend auf der ersten Geräte-Identifikation wiederum eine eigene Geräte-Identifikation abgeleitet, welche diesem Gerät, also gemäß Fig. 1 dem Gerät 101, zugewiesen wird. Diese abgeleitete Geräte-Identifikation kann daraufhin von dem Gerät, also gemäß Fig. 1 von dem Gerät 101, wiederum zusammen mit dessen eigener Geräte-Information an ein weiteres, zu diesem Gerät benachbart an das Netzwerk angeschaltetes, zur Nutzung des Protokolls zur Nachbarschaftserkennung eingerichtete Gerät, sofern vorhanden, versandt werden. Gemäß Fig. 1, wird demnach die für das Gerät 101 abgeleitete und diesem zugewiesene Geräte-Identifikation an das Gerät 102 versandt. Gemäß Erfindung wird ferner jedes weiteres, zur Nutzung des Protokolls zur Nachbarschaftserkennung eingerichtetes Gerät, welches an das zugrundeliegende Netzwerk, d.h. gemäß Fig. 1 an das Netzwerk 10, angeschaltet ist, nach Empfangen einer eine Geräte-Identifikation enthaltenden Geräte-Information basierend auf der darin enthaltenden Geräte-Identifikation wenigstens einmal wiederum eine eigene Geräte-Identifikation abgeleitet wird, welche dann diesem weiteren Gerät zugewiesen wird und von diesem weiteren Gerät zusammen mit dessen eigener Geräte-Information an ein anderes weiteres, zu diesem weiteren Gerät benachbart an das Netzwerk angeschaltete, zur Nutzung des Protokolls zur Nachbarschaftserkennung eingerichtete Gerät, gemäß Fig. 1 also z.B. von dem Gerät 102 an das Gerät 103, sofern vorhanden, versandt werden kann und insbesondere versandt wird.

Damit tauschen folglich die Nachbargeräte untereinander unter Nutzung des Protokolls zur Nachbarschaftserkennung das jeweilige Gerät betreffende Informationen einschließlich zur Geräte-Identifikation, insbesondere Gerätenamen und/oder IP-Adresse umfassend, aus.

Zur Ableitung der jeweils eigenen Geräte-Identifikationen wird in praktischer Umsetzung zweckmäßig ein einheitlicher Algorithmus in den Geräten, die zur Nutzung des Protokolls zur Nachbarschaftserkennung eingerichtet sind, hinterlegt, insbesondere auch basierend auf einer jeweiligen, dem Netzwerk zugrundeliegenden Topologie. Tauschen folglich die jeweiligen Nachbargeräte von einem ersten Gerät ausgehend und eine jeweilige Netzwerktopologie durchlaufend jeweilige Geräte-Identifikationen aus, also gemäß Fig. 1 z.B. von dem Gerät 100 jeweils mit dem benachbart angeschlossenen Gerät bis hin zum Gerät 103, so wird in diesem Fall die Geräte-Identifikation zweckmäßig stets an das gemäß Topologie nachfolgend benachbarte Gerät für die dortige Ableitung versandt. Ein gemäß der Topologie nachfolgend benachbartes Gerät leitet somit zweckmäßig seine eigene Geräte-Identifikation stets gemäß einheitlichem Algorithmus von der empfangenen Geräte-Identifikation des gemäß Topologie diesem Gerät jeweils vorgelagert benachbart angeschlossenen Gerätes ab.

Mit anderen Worten, sieht eine bevorzugte Ausführung der Erfindung vor, wie z.B. auch bei Fig. 1, ausgehend von der Anordnung, insbesondere von der physikalischen Anordnung am Netzwerk, des ersten, an das Netzwerk angeschalteten, zur Nutzung des Protokolls zur Nachbarschaftserkennung eingerichteten Geräts und des zu diesem benachbarten, zur Nutzung des Protokolls zur Nachbarschaftserkennung eingerichteten Gerätes, an welches die erste Geräte-Identifikation versandt wird, für alle diesem Gerät entlang eines weitergehenden gemeinsamen Netzwerkstrangs nachfolgend angeordneten, zur Nutzung des Protokolls zur Nachbarschaftserkennung eingerichteten Geräte, jeweils basierend auf der von dem jeweils vorgelagert angeordneten, benachbarten, zur Nutzung des Protokolls zur Nachbarschaftserkennung eingerichteten Gerät empfangenen Geräte-Identifikation die eigene Geräte-Identifikation insbesondere dadurch abzuleiten, dass an die empfangene Geräte-Identifikation ein Zusatz angehängt wird oder ein von der empfangenen Geräte-Identifikation umfasster Wert inkrementiert wird, insbesondere bei einem von der empfangenen Geräte-Identifikation umfassten Wert "X" der Wert "X+1" abgeleitet wird. In praktischer Umsetzung ist hierbei folglich ferner insbesondere vorgesehen, dass für alle entlang eines gemeinsamen Netzwerkstrangs nachfolgend angeordneten Geräte ein einheitlicher und also insbesondere stets derselbe Algorithmus angewandt wird.

Unter Bezugnahme auf Fig. 1 empfängt z.B. Gerät 101 die IP Information, z.B. eine IP-Adresse IP1, des Geräts 100, also gemäß Ausführung des Wurzelgerätes, mit den LLDP Informationen, und leitet, insbesondere nach Entnahme dieser IP Adresse aus den LLDP Informationen, davon eine eigene IP Information, z.B. die IP-Adresse IP2 ab. Diese wird per LLDP dem nächsten Nachbargerät 102 mitgeteilt. Dieses leitet davon z.B. die IP-Adresse IP3 ab und verfährt wie Gerät 101, usw. Gemäß Fig. 1 endet der Netzwerkstrang beim Gerät 103, sodass dieses von der per LLDP vom vorhergehenden Nachbargerät 102 empfangen IP-Adresse IP3 noch die eigene IP-Adresse IP4 ableitet aber nicht mehr weiterversendet bzw. versenden muss.

Insbesondere zur Erhöhung der Sicherheit, dass also z.B. sicher erkannt wird, wenn aufgrund eines wie auch immer gearteten Fehlers die Selbstzuweisung einer eindeutigen Geräte-Identifikationen nicht mehr gewährleistet ist bzw. zur zusätzlichen Überwachung der korrekt ausgeführten Selbstzuweisung einer eindeutigen Geräte-Identifikationen, und also insbesondere um jegliche potentielle Konflikte bei den Geräte-Identifikationen, z.B. Adresskonflikte, zu vermeiden, werden die einem jeweiligen Gerät zugewiesene Geräte-Identifikation an eine zentrale Stelle zur dortigen Hinterlegung, insbesondere Reservierung, versandt, insbesondere an einen zentralen DHCP Server (vgl. Fig. 1), insbesondere z.B. an einen zentralen DHCP Server, welcher von dem ersten, an das Netzwerk angeschaltete Gerät bereitgestellt wird. Ergänzend kann gemäß bevorzugter Ausführungsformen die jeweils abgeleitete und dem jeweiligen Gerät zugewiesene Geräte-Identifikation in einem Speicher dieses entsprechenden Gerätes abgelegt werden.

Sofern zu einem Zeitpunkt erkannt wird, dass eine bereits zentral hinterlegte, also insbesondere reservierte Geräte-Identifikation ein weiteres Mal zur Hinterlegung, insbesondere Reservierung anstehen sollte, wodurch die Eindeutigkeit der Geräte-Identifikation nicht mehr gegeben wäre, kann somit, insbesondere situationsbedingt, umgehend auf einen Fehler erkannt werden und insbesondere eine entsprechende Reaktion ausgelöst werden, zweckmäßiger Weise eine sicherheitsgerichtete Reaktion ausgelöst werden, z.B. die weitere Einrichtung des Netzwerkes oder auch eines Netzwerksegments und/oder die letztendliche vollständige Inbetriebnahme abgebrochen werden und/oder der weitere Betrieb eines vollständig in Betrieb genommen Netzwerkes oder auch Netzwerksegments gestoppt werden.

Gemäß vorstehender Beschreibung ist ein erfindungsgemäßes Netzwerkgerät zumindest unter Nutzung eines Protokolls zur Nachbarschaftserkennung eingerichtet, wie z.B. das Gerät 103 entsprechend Fig. 1, nach Anschalten an ein Netzwerk und nach Empfangen einer eine Geräte-Identifikation enthaltenden Geräte-Information eines benachbart zum Netzwerkgerät am Netzwerk angeschalteten Gerätes, basierend auf der darin enthaltenden Geräte-Identifikation zum Ableiten, insbesondere Netzwerktopologie-basiert, wenigstens einmal einer eigenen Geräte-Identifikation, und zum eigenen Zuweisen dieser Geräte-Identifikation. Insbesondere, wenn das Netzwerkgerät nicht das letzte in einem jeweiligen Netzwerkstrang angeordnete Gerät bildet, ist das Netzwerkgerät, wie z.B. die Gerät 101 und 102 entsprechend Fig. 1, ferner eingerichtet, zumindest noch zum Versenden dieser eigenen Geräte-Identifikation an ein anderes, benachbart zum Netzwerkgerät am Netzwerk angeschalteten Gerät.

In bevorzugter Weiterbildung sind die Netzwerkgeräte somit ferner zweckmäßig eingerichtet, zum Speichern und insbesondere auch dieser eigenen Geräte-Identifikation und/oder zum Versenden dieser eigenen Geräte-Identifikation an eine zentrale Stelle zur dortigen Hinterlegung, insbesondere Reservierung. Eine solche zentrale Stelle kann z.B. auch durch ein als DHCP-Server ausgebildetes erstes Gerät bereitgestellt sein.

Optional kann, welches aus Gründen der Überschaubarkeit jedoch in den Figuren nicht weiter dargestellt ist, nach Zuweisung aller Geräte-Identifikationen für alle angeschalteten Geräte, für jedes Gerät automatisch eine Konfigurationsdatei, insbesondere unter Einbeziehung der jeweiligen Geräte-Identifikation im Namen der Konfigurationsdatei, zusammengestellt und insbesondere zur vollständigen Inbetriebnahme des Netzwerkes in dem Gerät hinterlegt werden. So kann z.B. zweckmäßig ein automatischer Download einer Konfigurationsdatei zur vollständigen automatischen Inbetriebnahme der Netzwerkinfrastrukturgeräte vorgesehen sein. Um hierbei auch eine geräteindividuelle Zuweisung einer Konfigurationsdatei zu ermöglichen, kann bevorzugt die jeweilige Geräte-Identifikation im Namen der Datei aufgeführt sein, mit welcher eine jeweilige Konfigurationsdatei auf einfache Weise geräteindividuell zugewiesen werden kann. Erfolgt der Download von zentraler Stelle aus, können die jeweiligen Geräte-Identifikationen beispielsweise über den jeweils angewandten Algorithmus bekannt sein oder auch z.B. aus einem Speicher entnommen werden, in welchem diese abgelegt, insbesondere gemäß vorstehender Beschreibung zentral hinterlegt worden sind. Wird der Download ergänzend oder alternativ von dem jeweiligen Gerät mit erfindungsgemäß zugewiesener Geräte-Identifikation aus eingeleitet, so kann hierbei, insbesondere bei entsprechender Download-Anfrage, diese Geräte-Identifikationen auch zur Information entsprechend bekannt gegeben werden.

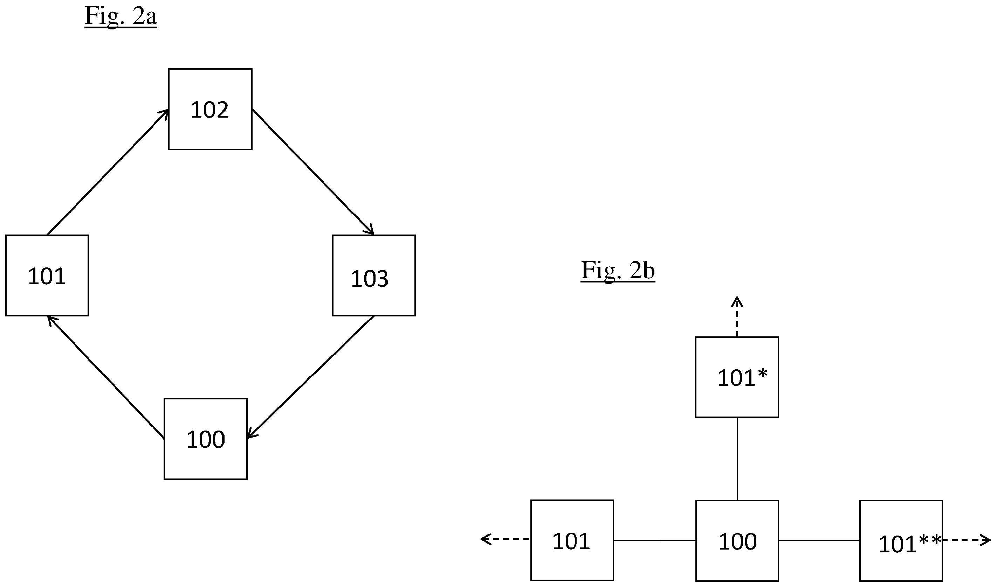

Liegt in Abwandlung zur Fig. 1, z.B. eine Ringtopologie gemäß Fig. 2a als beispielhafte Topologiestruktur mit erfindungsgemäß eingerichteten Netzwerkgeräten vor, kann folglich im Rahmen der Erfindung von einem dort als erstes Gerät eingerichtetes Gerät, z.B. wiederum dem Gerät 100, dessen bereits zugewiesene Geräte-Identifikation zunächst an ein benachbart angeschlossenes Gerät, z.B. wiederum an das Gerät 102 versandt werden, welches auf dieser empfangenen Geräte-Identifikation die eigene Geräte-Identifikation ableitet und diese wiederum an das nächstfolgende benachbart angeschlossene Gerät, z.B. wiederum an das Gerät 102 versendet, welches auf dieser empfangenen Geräte-Identifikation die eigene Geräte-Identifikation ableitet und diese wiederum an das nächstfolgende benachbart angeschlossene Gerät, z.B. wiederum an das Gerät 103 versendet, usw., bis das nächstfolgende Gerät wieder das erste in dieser Ringtopologie eingerichtete Gerät, also im dargestellten Beispiel das Gerät 100 ist. Da dieses bereits eine eigene Geräte-Identifikation besitzt, muss dieses "erste Gerät" folglich keine eigene Geräte-Identifikation erneut ableiten und die erfindungsgemäße Selbstzuweisung von Geräte-Identifikationen endet somit an dieser Stelle.

Liegt in Abwandlung zur Fig. 1, z.B. eine Struktur gemäß Fig. 2b als beispielhafte Topologiestruktur mit erfindungsgemäß eingerichteten Netzwerkgeräten vor, d.h. eine dem Netzwerk zugrundeliegenden Topologie z.B. eine Art Sternstruktur, aufgrund welcher grundsätzlich dieselbe Geräte-Identifikation an mehrere, zur Nutzung des Protokolls zur Nachbarschaftserkennung eingerichtete Geräte versandt werden würde, z.B. ausgehend vom Gerät 100 gemäß Fig. 2 an die Geräte 101, 101* und 101**, kann somit ferner das Verfahren, d.h. insbesondere im Rahmen der Erfindung das die Geräte-Identifikation versendende Gerät, also z.B. das Gerät 100 gemäß Fig. 2, und die die Geräte-Identifikation empfangenen Geräte, also z.B. die Geräte 101, 101* und 101**gemäß Fig. 2, auch wie folgt eingerichtet werden. Dieser Geräte-Identifikation wird mit jedem Versenden durch ein und dasselbe versendende Gerät, jeweils ein um einen auf der Netzwerktopologie basierten Wert inkrementierter Zusatz angehängt, welcher bei der nachfolgenden Ableitung der jeweils eigenen Geräte-Identifikation durch das jeweilige empfangende Gerät berücksichtigt wird. Ein solcher, um einen auf der Netzwerktopologie basierten Wert inkrementierter Zusatz, kann z.B. auf dem jeweiligen Port eines solchen die Geräte-Identifikation versendenden Gerät basieren. Ist das Gerät 100 gemäß Fig. 2 folglich z.B. das erste Gerät, dem bereits eine Geräte-Identifikation zugewiesen worden ist, kann für jeden, von diesem Gerät ausgehenden Netzwerkstrang eine eindeutige, um einen jeweiligen Zusatz ergänzte, individualisierte Geräte-Identifikation versandt werden, sodass wiederum für alle weiteren, entlang jeweils eines gemeinsamen Netzwerkstrangs nachfolgend angeordneten Geräte bevorzugt ein einheitlicher und also stets derselbe Algorithmus angewandt werden kann.

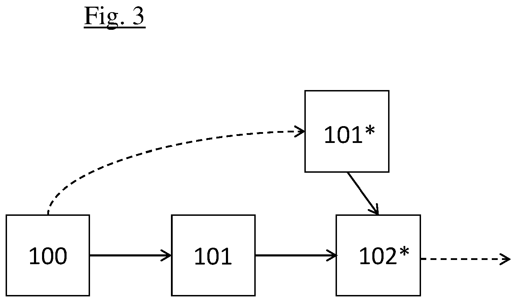

Liegt in Abwandlung zur Fig. 1, z.B. eine Struktur gemäß Fig. 3 als beispielhafte Topologiestruktur mit erfindungsgemäß eingerichteten Netzwerkgeräten vor, d.h., dass aufgrund der dem Netzwerk zugrundeliegenden Topologie ein Gerät, z.B. das Gerät 102* gemäß Fig. 2, Geräte-Identifikationen von mehreren Geräten empfängt, z.B. von den Geräten 101 und 101* gemäß Fig. 2 können das erfindungsgemäße Verfahren und die Netzwerkgeräte folglich im Rahmen der Erfindung ferner auch weitergebildet sein, dass für das Gerät, welche diese mehreren Geräte-Identifikation empfängt, vor Ableitung der eigenen Geräte-Identifikation unter Nutzung einer auf der Netzwerktopologie basierten und in den Geräten hinterlegten einheitlichen Verknüpfungsvorschrift diese mehreren Geräte-Identifikation zunächst zu einer gemeinsamen Geräte-Identifikation miteinander verknüpft werden, welche daraufhin als empfangene Geräte-Identifikation zur Ableitung der eigenen Geräte-Identifikation genutzt wird. Folglich beispielsweise auch unter Einbeziehung einer solchen Verknüpfungsvorschrift grundsätzlich wiederum für alle weiteren, entlang jeweils eines gemeinsamen Netzwerkstrangs nachfolgend angeordneten Geräte bevorzugt ein einheitlicher und also stets derselbe Algorithmus angewandt werden.

Wird ferner gemäß einer weiteren Ausbildung, ein weiteres zur Nutzung des Protokolls zur Nachbarschaftserkennung erfindungsgemäß eingerichtetes Gerät entweder am bisherigen Ende eines gemeinsamen Netzwerkstrangs neu angeschlossen, oder auch neu zwischen zwei bereits zuvor in das Netzwerk eingebunden, angeschlossen, oder auch ein solches Gerät eines bereits eingerichteten Netzwerkes ausgetauscht, wird das erfindungsgemäße Verfahren zweckmäßig neu gestartet und bevorzugt die diesbezüglich zuvor gespeicherten und/oder hinterlegten Geräte-Identifikationen aus Sicherheitsgründen verworfen.

Aus vorgehender Beschreibung ist ersichtlich, dass das erfindungsgemäße Vorgehen rein Software- oder rein Hardware- implementiert oder auch durch eine Kombination geeigneter Hard- und Software gegeben sein. Auch kann für das erfindungsgemäße Vorgehen eine separate Funktionseinheit innerhalb des Netzwerkgerätes vorgesehen sein. Entsprechend kann auch die erfindungsgemäße Einrichtung eines hierfür geeigneten Netzwerkgerätes rein Software- oder rein Hardware- implementiert oder auch durch eine Kombination geeigneter Hard- und Software gegeben sein sowie ergänzend oder alternativ für die erfindungsgemäße Einrichtung eines hierfür geeigneten Netzwerkgerätes eine separate Funktionseinheit innerhalb des Netzwerkgerätes vorgesehen sein. So kann eine separate Funktionseinheit z.B. auch als Software auf ohnehin in dem Netzwerkgerät vorhandener Hardware, beispielsweis einem vorhandenen Prozessor, laufen. Es kann aber auch Hardware speziell für eine separate Funktionseinheit vorgesehen sein. Auch kann für das Vorgehen, die separate Funktionseinheit und/oder für die erfindungsgemäße Einrichtung ein Computerprogramm vorgesehen sein, das Programmcodemittel zur Durchführung der Schritte des erfindungsgemäßen Verfahrens umfasst. Ebenso kann hierfür auch ein computerlesbares Medium, z.B. eine CD-ROM oder DVD oder ein USB oder Flash Speicher, Verwendung finden, welches Instruktionen umfasst, die, wenn sie auf wenigstens einem Computer ausgeführt werden, den wenigstens einen Computer veranlassen, die Schritte des erfindungsgemäßen Verfahrens durchzuführen. Ein solches computerlesbare Medium muss jedoch nicht ausschließlich ein körperliches Medium sein, sondern kann beispielswiese auch in Form eines Datenstromes und/oder eines Signals, welches einen Datenstrom repräsentiert, vorliegen.

Zusammenfassend betrifft die Erfindung folglich ein Zuweisungsverfahren zum Zuweisen von Geräte-Identifikationen für an ein Netzwerk angeschaltete Netzwerkgeräte und ein hierzu unter Nutzung eines Protokolls zur Nachbarschaftserkennung eingerichtetes Netzwerkgerät, wobei von einem ersten, an das Netzwerk angeschaltete eingerichtete Netzwerkgerät (100), dem eine erste Geräte-Identifikation zugewiesen worden ist, diese erste Geräte-Identifikation zusammen mit dessen eigener Geräte-Information an ein benachbart an das Netzwerk angeschaltetes Netzwerkgerät (101) versandt wird. Nach Empfangen der diese erste Geräte-Identifikation enthaltenden Geräte-Information durch dieses benachbart an das Netzwerk angeschaltete Netzwerkgerät (101) wird für dieses Netzwerkgerät basierend auf der ersten Geräte-Identifikation wiederum eine eigene Geräte-Identifikation abgeleitet, welche diesem Netzwerkgerät zugewiesen und kann zweckmäßig von diesem Netzwerkgerät (101) zusammen mit dessen eigener Geräte-Information an ein weiteres, zu diesem Netzwerkgerät benachbart an das Netzwerk angeschaltetes Netzwerkgerät (102), sofern vorhanden, versandt werden. Für jedes weitere Netzwerkgerät (102, 103) wird nach Empfangen einer eine Geräte-Identifikation enthaltenden Geräte-Information basierend auf der darin enthaltenden Geräte-Identifikation wenigstens einmal wiederum eine eigene Geräte-Identifikation abgeleitet, welche dann diesem weiteren Netzwerkgerät zugewiesen und von diesem weiteren Netzwerkgerät zusammen mit dessen eigener Geräte-Information zweckmäßig an ein anderes weiteres (103), zu diesem weiteren Netzwerkgerät benachbart an das Netzwerk angeschaltete Netzwerkgerät, sofern vorhanden, versandt werden kann.

## Patentansprüche

1. Zuweisungsverfahren zum Zuweisen von Geräte-Identifikationen für an ein Netzwerk angeschaltete Geräte (100, 101*, 101**, 102, 102*, 103), die zur Nutzung eines herstellerunabhängiges Layer 2 Protokolls zur Nachbarschaftserkennung eingerichtet sind, und zwar zum Einrichten des Netzwerkes, wobei jedes dieser an das Netzwerk angeschalteten und zur Nutzung dieses Protokolls eingerichteten Geräte unter Nutzung dieses Protokolls eingerichtet ist, zum Versenden eigener Geräte-Information an, entsprechend einer für das Netzwerk verwendeten Netzwerktopologie, benachbart an das Netzwerk angeschaltete, zur Nutzung des Protokolls zur Nachbarschaftserkennung eingerichtete Geräte und zum Empfangen von Geräte-Information von, entsprechend der Netzwerktopologie benachbart an das Netzwerk angeschalteten, zur Nutzung des Protokolls zur Nachbarschaftserkennung eingerichteten Geräten,
wobei:
- von einem ersten, an das Netzwerk angeschaltete, zur Nutzung des Protokolls zur Nachbarschaftserkennung eingerichtete Gerät (100), dem eine erste Geräte-Identifikation zugewiesen worden ist, diese erste Geräte-Identifikation zusammen mit dessen eigener Geräte-Information an ein benachbart an das Netzwerk angeschaltetes, zur Nutzung des Protokolls zur Nachbarschaftserkennung eingerichtetes Gerät (101) versandt wird, und
- nach Empfangen der diese erste Geräte-Identifikation enthaltenden Geräte-Information durch dieses benachbart an das Netzwerk angeschaltete Gerät (101) für dieses Gerät basierend auf der ersten Geräte-Identifikation wiederum eine eigene Geräte-Identifikation abgeleitet und diesem Gerät selbst zugewiesen wird und von diesem Gerät (101) zusammen mit dessen eigener Geräte-Information an ein weiteres, zu diesem Gerät benachbart an das Netzwerk angeschaltetes, zur Nutzung des Protokolls zur Nachbarschaftserkennung eingerichtetes Gerät (102), sofern vorhanden, versandt werden kann und insbesondere versandt wird,
- und wobei für jedes weiteres, zur Nutzung des Protokolls zur Nachbarschaftserkennung eingerichtetes Gerät (102, 103) nach Empfangen einer eine Geräte-Identifikation enthaltenden Geräte-Information basierend auf der darin enthaltenden Geräte-Identifikation wenigstens einmal wiederum eine eigene Geräte-Identifikation abgeleitet wird und dann diesem weiteren Gerät selbst zugewiesen wird und von diesem weiteren Gerät zusammen mit dessen eigener Geräte-Information an ein anderes weiteres (103), zu diesem weiteren Gerät benachbart an das Netzwerk angeschaltetes, zur Nutzung des Protokolls zur Nachbarschaftserkennung eingerichtetes Gerät, sofern vorhanden, versandt werden kann und insbesondere versandt wird,
wobei das Layer 2 Protokoll genutzt wird, zwischen jeweils benachbart an das Netzwerk angeschalteten, zur Nutzung des Protokolls zur Nachbarschaftserkennung eingerichteten Geräten das jeweilige Gerät betreffende Informationen auszutauschen, und zwar mit darin umfasster IP-Adresse zur Geräte-Identifikation, und
**dadurch gekennzeichnet dass** die einem jeweiligen, zur Nutzung des Protokolls zur Nachbarschaftserkennung eingerichteten Gerät zugewiesene Geräte-Identifikation an eine zentrale Stelle zur dortigen Hinterlegung, insbesondere Reservierung, versandt wird, und sofern zu einem Zeitpunkt erkannt wird, dass eine bereits zentral hinterlegte, also insbesondere reservierte Geräte-Identifikation ein weiteres Mal zur Hinterlegung, insbesondere Reservierung anstehen sollte, wodurch die Eindeutigkeit der Geräte-Identifikation nicht mehr gegeben wäre, umgehend auf einen Fehler erkannt und insbesondere eine entsprechende Reaktion ausgelöst wird, zweckmäßiger Weise eine sicherheitsgerichtete Reaktion ausgelöst wird, z.B. die weitere Einrichtung des Netzwerkes oder auch eines Netzwerksegments und/oder die letztendliche vollständige Inbetriebnahme abgebrochen und/oder der weitere Betrieb eines vollständig in Betrieb genommen Netzwerkes oder auch Netzwerksegments gestoppt wird.

2. Zuweisungsverfahren nach Anspruch 1, wobei die einem jeweiligen, zur Nutzung des Protokolls zur Nachbarschaftserkennung eingerichteten Gerät zugewiesene Geräte-Identifikation in einem Speicher dieses entsprechenden Gerätes abgelegt wird.

3. Zuweisungsverfahren nach einem der vorstehenden Ansprüche, wobei nach Zuweisung aller Geräte-Identifikationen für alle angeschalteten Geräte, für jedes Gerät automatisch eine Konfigurationsdatei, insbesondere unter Einbeziehung der jeweiligen Geräte-Identifikation im Namen der Konfigurationsdatei, zusammengestellt und zur vollständigen Inbetriebnahme des Netzwerkes in dem Gerät hinterlegt wird.

4. Zuweisungsverfahren nach einem der vorstehenden Ansprüche, wobei zur Ableitung der eigenen Geräte-Identifikationen ein einheitlicher Algorithmus in den Geräten, die zur Nutzung des Protokolls zur Nachbarschaftserkennung eingerichtet sind, hinterlegt wird, insbesondere auch basierend auf einer jeweiligen, dem Netzwerk zugrundeliegenden Topologie.

5. Zuweisungsverfahren nach einem der vorstehenden Ansprüche, wobei ausgehend von der Anordnung, insbesondere von der physikalischen Anordnung am Netzwerk, des ersten, an das Netzwerk angeschalteten, zur Nutzung des Protokolls zur Nachbarschaftserkennung eingerichteten Gerätes und des zu diesem benachbarten, zur Nutzung des Protokolls zur Nachbarschaftserkennung eingerichteten Gerätes, an welches die erste Geräte-Identifikation versandt wird, für alle diesem Gerät entlang eines weitergehenden gemeinsamen Netzwerkstrangs nachfolgend angeordneten, zur Nutzung des Protokolls zur Nachbarschaftserkennung eingerichteten Geräte, jeweils basierend auf der von dem jeweils vorgelagert angeordneten, benachbarten, zur Nutzung des Protokolls zur Nachbarschaftserkennung eingerichteten Gerät empfangenen Geräte-Identifikation die eigene Geräte-Identifikation dadurch abgeleitet wird, dass an die empfangene Geräte-Identifikation ein Zusatz angehängt wird oder ein von der empfangenen Geräte-Identifikation umfasster Wert inkrementiert wird, insbesondere bei einem von der empfangenen Geräte-Identifikation umfassten Wert "X" der Wert "X+1" abgeleitet wird.

6. Zuweisungsverfahren nach einem der vorstehenden Ansprüche, wobei im Fall des Versendens derselben Geräte-Identifikation aufgrund der dem Netzwerk zugrundeliegenden Topologie an mehrere, zur Nutzung des Protokolls zur Nachbarschaftserkennung eingerichteten Geräte (101, 101*; 101**), das die Geräte-Identifikation versendende Gerät (100) dieser Geräte-Identifikation mit jedem Versenden einen, jeweils um einen auf der Netzwerktopologie basierten Wert inkrementierten Zusatz anhängt, welcher bei der Ableitung der jeweils eigenen Geräte-Identifikation berücksichtigt wird.

7. Zuweisungsverfahren nach einem der vorstehenden Ansprüche, wobei im Fall des Empfangen von Geräte-Identifikationen aufgrund der dem Netzwerk zugrundeliegenden Topologie von mehreren Geräten (101, 101*), diese empfangenen Geräte-Identifikationen vor Ableitung der eigenen Geräte-Identifikation unter Nutzung einer auf der Netzwerktopologie basierten und in den Geräten hinterlegten einheitlichen Verknüpfungsvorschrift zunächst zu einer gemeinsamen Geräte-Identifikation miteinander verknüpft werden, die als empfangene Geräte-Identifikation zur Ableitung der eigenen Geräte-Identifikation genutzt wird.

8. Computerprogramm umfassend Programmcode-Mittel zur Durchführung des Verfahrens nach einem der Ansprüche 1 bis 7.

9. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 7 durchzuführen.

## Claims

1. Allocation method for allocating device identifiers to devices (100, 101*, 101**, 102, 102*, 103) connected to a network, which are configured to use a vendor-independent Layer 2 neighborhood discovery protocol, for setting up the network, wherein each of said devices connected to the network and configured to use said protocol is configured using said protocol, for sending own device information to devices connected adjacent to the network according to a network topology used for the network and configured to use the neighborhood discovery protocol, , and for receiving device information from devices connected adjacent to the network according to the network topology and configured to use the neighborhood discovery protocol, ,
wherein:
- from a first device (100) connected to the network and configured to use the neighborhood discovery protocol, to which a first device identification has been allocated, this first device identification is sent together with its own device information to a device (101) connected adjacent to the network and configured to use the neighborhood discovery protocol, and
- after receipt of the device information containing this first device identification by this device (101) connected adjacent to the network, a device identification of its own is in turn derived for this device based on the first device identification and allocated to this device itself and can be sent by this device (101) together with its own device information to a further device (102) connected adjacent to this device to the network and configured for use of the protocol for neighborhood discovery, if present, and in particular is sent,
- and wherein for each further device (102, 103) configured to use the protocol for neighborhood discovery, after receiving device information containing a device identifier, based on the device identifier contained therein, a separate device identifier is derived at least once again and is then assigned to this further device itself and can be sent by this further device together with its own device information to another further device (103) connected to the network adjacent to this further device and configured to use the protocol for neighborhood discovery, if present, and in particular is sent;
wherein the layer 2 protocol is used to exchange information relating to the respective device between devices connected adjacent to the network and configured to use the protocol for neighborhood discovery, with an IP address included therein for device identification, and **characterized in that**
the device identification allocated to a respective device configured to use the protocol for neighborhood discovery is sent to a central location for storage, in particular reservation, and if it is detected at a point in time that an already centrally stored, i.e. in particular reserved, device identification is due for storage, in particular reservation, a further time, as a result of which the uniqueness of the device identification would no longer be given, an error is detected immediately and, in particular, a corresponding reaction is triggered, expediently a safety-related reaction is triggered, e.g. the further setup of the network or of a network segment and/or the final complete commissioning is aborted and/or the further operation of a fully commissioned network or network segment is stopped.

2. Allocation method according to claim 1, wherein the device identification allocated to a respective device configured to use the protocol for neighborhood discovery is stored in a memory of this corresponding device.

3. Allocation method according to one of the preceding claims, wherein after allocation of all device identifications for all connected devices, a configuration file is automatically compiled for each device, in particular including the respective device identification in the name of the configuration file, and stored in the device for complete commissioning of the network.

4. Allocation method according to one of the preceding claims, wherein a uniform algorithm is stored in the devices configured to use the protocol for neighborhood discovery to derive the own device identifications, in particular also based on a respective topology underlying the network.

5. *Allocation method according to one of the preceding claims, wherein, starting from the arrangement, in particular from the physical arrangement on the network, of the first device connected to the network and configured use the protocol for neighborhood discovery and the device adjacent to this device and configured to use the protocol for neighborhood discovery, to which the first device identification is sent, for all devices arranged downstream of this device along a continuing common network strand and configured to use the protocol for neighborhood discovery, in each case based on the device identification received from the neighboring device arranged upstream and configured to use the protocol for neighborhood detection, the own device identification is derived by appending an addition to the received device identification or by incrementing a value included by the received device identification, in particular by deriving the value "X+1" in the case of a value "X" included by the received device identification.

6. Allocation method according to one of the preceding claims, wherein in the case of sending the same device identification on the basis of the topology underlying the network to a plurality of devices (101, 101*; 101**) configured to use the protocol for neighborhood discovery, the device (100) sending the device identification appends to this device identification with each sending an addition which is incremented by a value based on the network topology and which is taken into account in the derivation of the respective own device identification.

7. Allocation method according to one of the preceding claims, wherein in the case of receiving device identifications due to the topology of several devices (101, 101*) on which the network is based, these received device identifications are first linked to one another before the own device identification is derived, using a uniform linking rule based on the network topology and stored in the devices, to form a common device identification which is used as the received device identification for deriving the own device identification.

8. A computer program comprising program code means for carrying out the method according to any one of claims 1 to 7.

9. A computer readable medium comprising instructions which, when executed on at least one computer, cause the at least one computer to perform the steps of the method according to any one of claims 1 to 7.

## Revendications

1. Procédé d'attribution pour l'attribution d'identifications de dispositif pour des dispositifs (100, 101*, 101**, 102, 102*, 103) connectés à un réseau, lesquels sont conçus pour utiliser un protocole de couche 2 indépendant du fabricant pour la détection de voisinage, à savoir pour la mise en place du réseau, dans lequel chacun desdits dispositifs connectés au réseau, conçus pour utiliser ledit protocole est configuré à l'aide dudit protocole pour envoyer des informations de dispositif propres, conformément à une topologie de réseau utilisée pour le réseau, à des dispositifs adjacents connectés au réseau, conçus pour utiliser le protocole de détection de voisinage et pour recevoir des informations de dispositif, conformément à la topologie de réseau, à partir des dispositifs adjacents connectés au réseau, conçus pour utiliser le protocole de détection de voisinage,
dans lequel :
- à partir d'un premier dispositif (100) connecté au réseau, conçu pour utiliser le protocole de détection de voisinage, auquel une première identification de dispositif a été attribuée, ladite première identification de dispositif est envoyée conjointement avec ses informations de dispositif propres à un dispositif (101) adjacent connecté au réseau, conçu pour utiliser le protocole de détection de voisinage, et
- après la réception des informations de dispositif contenant ladite première identification de dispositif par ledit dispositif (101) adjacent connecté au réseau, une identification de dispositif propre est dérivée à son tour pour ledit dispositif en fonction de la première identification de dispositif et attribuée audit dispositif lui-même, et peut être envoyée et en particulier est envoyée par ledit dispositif (101) conjointement avec ses informations de dispositif propres à un autre dispositif (102) adjacent audit dispositif connecté au réseau, conçu pour utiliser le protocole de détection de voisinage, si disponible,
- et dans lequel pour chaque autre dispositif (102, 103) conçu pour utiliser le protocole de détection de voisinage, après la réception des informations de dispositif comprenant une identification de dispositif, une identification de dispositif propre est dérivée au moins une fois à son tour en fonction de l'identification de dispositif, laquelle est contenue dans celle-ci et est ensuite attribuée audit autre dispositif lui-même et peut être envoyée et en particulier est envoyée ledit autre dispositif conjointement avec ses informations de dispositif propres à un autre dispositif (103) adjacent audit dispositif connecté au réseau, conçu pour utiliser le protocole de détection de voisinage, si disponible ;
dans lequel le protocole de couche 2 est utilisé pour échanger des informations relatives au dispositif respectif entre des dispositifs adjacents connectés au réseau, conçus pour utiliser le protocole de détection de voisinage, à savoir comportant une adresse IP pour l'identification de dispositif incluse dans celles-ci, et **caractérisé en ce que** l'identification de dispositif attribuée à un dispositif respectif conçu pour utiliser le protocole de détection de voisinage est envoyée à un emplacement central pour la mémorisation, en particulier la réservation à cet emplacement, et lorsqu'il est déterminé à un moment qu'une identification de dispositif, laquelle a déjà été mémorisée de manière centralisée, c'est-à-dire en particulier réservée, doit être à nouveau mémorisée, en particulier réservée, ce qui rendrait impossible le caractère univoque de l'identification de dispositif, une erreur est immédiatement déterminée et en particulier une réaction correspondante est déclenchée, une réaction liée à la sécurité est avantageusement déclenchée, par exemple, la mise en place ultérieure du réseau ou d'un segment réseau et/ou la mise en fonctionnement complète finale sont interrompues et/ou le fonctionnement ultérieur d'un réseau ou d'un segment réseau entièrement mis en fonctionnement sont arrêtés.

2. Procédé d'attribution selon la revendication 1, dans lequel l'identification de dispositif attribuée à un dispositif respectif conçu pour utiliser le protocole de détection de voisinage est mémorisée dans une mémoire dudit dispositif correspondant.

3. Procédé d'attribution selon l'une quelconque des revendications précédentes, dans lequel, après l'attribution de toutes les identifications de dispositif pour tous les dispositifs connectés, un fichier de configuration est automatiquement compilé pour chaque dispositif, en particulier comprenant l'identification de dispositif respective dans le nom du fichier de configuration, et mémorisé dans le dispositif pour la mise en fonctionnement complète du réseau.

4. Procédé d'attribution selon l'une quelconque des revendications précédentes, dans lequel un algorithme uniforme est mémorisé dans les dispositifs conçus pour utiliser le protocole de détection de voisinage pour dériver les identifications de dispositif propres, en particulier également en fonction d'une topologie respective sous-jacente au réseau.

5. Procédé d'attribution selon l'une quelconque des revendications précédentes, dans lequel, en fonction de l'agencement, en particulier de l'agencement physique du réseau, du premier dispositif connecté au réseau, conçu pour utiliser le protocole de détection de voisinage et du dispositif adjacent audit dispositif, conçu pour utiliser le protocole de détection de voisinage, auquel la première identification de dispositif est envoyée, pour tous les dispositifs disposés en aval dudit dispositif le long d'un autre brin de réseau commun, conçus pour utiliser le protocole de détection de voisinage, respectivement en fonction de l'identification de dispositif reçue du dispositif adjacent disposé respectivement en amont, conçu pour utiliser le protocole de détection de voisinage, l'identification de dispositif propre est dérivée de telle sorte qu'un suffixe est ajouté à l'identification de dispositif reçue ou une valeur comprenant l'identification de dispositif reçue est incrémentée, en particulier la valeur « X+1 » est dérivée d'une valeur « X » comprenant l'identification de dispositif reçue.

6. Procédé d'attribution selon l'une quelconque des revendications précédentes, dans lequel, dans le cas de l'envoi de la même identification de dispositif en raison de la topologie sous-jacente au réseau à plusieurs dispositifs (101, 101* ; 101**) conçus pour utiliser le protocole de détection de voisinage, le dispositif (100) envoyant l'identification de dispositif ajoute à ladite identification de dispositif à chaque envoi un suffixe incrémenté respectivement d'une valeur basée sur la topologie du réseau, laquelle est prise en compte lors de la dérivation de l'identification de dispositif propre respective.

7. Procédé d'attribution selon l'une quelconque des revendications précédentes, dans lequel, dans le cas de la réception d'identifications de dispositif en fonction de la topologie sous-jacente au réseau provenant de plusieurs dispositifs (101, 101*), lesdites identifications de dispositif reçues, avant la dérivation de l'identification de dispositif propre, sont d'abord liées les unes aux autres en utilisant une règle de liaison uniforme basée sur la topologie de réseau et mémorisées dans les dispositifs pour former une identification de dispositif commune, laquelle est utilisée comme identification de dispositif reçue pour dériver l'identification de dispositif propre.

8. Programme informatique comprenant un moyen de code de programme pour la mise en œuvre du procédé selon l'une quelconque des revendications 1 à 7.

9. Support lisible par ordinateur comprenant des instructions, lesquelles, lorsqu'elles sont exécutées sur au moins un ordinateur, amènent l'au moins un ordinateur à mettre en œuvre les étapes du procédé selon l'une quelconque des revendications 1 à 7.
